(19)

**Europäisches Patentamt**

**European Patent Office**

**Office européen des brevets**

(11) **EP 4 726 574 A1**

(12) **EUROPEAN PATENT APPLICATION**

(43) Date of publication:
**15.04.2026   Bulletin 2026/16**

(21) Application number: **24206513.4**

(22) Date of filing: **14.10.2024**

(51) International Patent Classification (IPC):
**G06F 16/3329** (2025.01)    **G06F 16/387** (2019.01)

(52) Cooperative Patent Classification (CPC):
**G06F 16/387; G06F 16/33295**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **GDM Holding LLC**
**Mountain View, CA 94043 (US)**

(72) Inventors:
• **SHARIFI, Matthew**
**8002 Zurich (CH)**
• **HARTMANN, Florian**
**8002 Zurich (CH)**

(74) Representative: **Varley, James Richard**
**Venner Shipley LLP**
**200 Aldersgate**
**London EC1A 4HD (GB)**

(54) **LOCATION-AWARE MACHINE-LEARNING MODELS**

(57)    This specification relates to adapting machine-learning models to respond to location-based queries. According to a first aspect of this specification, there is described a computer implemented method comprising receiving, at a user device, a user query, and determining location information indicating a location related to teh query. The method comprises retrieving one or more location profiles based on the location information. A location profile is associated with a respective geographic area and comprises a set of parameter modifications to parameters of a base machine-learning model. The method comprises applying the set of parameter modifications of the one or more retrieved location profiles to the base machine-learning model to obtain a modified machine-learning model and processing the user query using the modified machine-learning model to generate a response to the user query. The response to the user query is output via the user device.

**EP 4 726 574 A1**

## Description

FIELD

This specification relates to adapting machine-learning models to respond to location-based queries.

BACKGROUND

This specification relates to processing data using machine learning models.

Machine learning models receive an input and generate an output, e.g., a predicted output, based on the received input. Some machine learning models are parametric models and generate the output based on the received input and on values of the parameters of the model.

Some machine learning models are deep models that employ multiple layers of models to generate an output for a received input. For example, a deep neural network is a deep machine learning model that includes an output layer and one or more hidden layers that each apply a non-linear transformation to a received input to generate an output.

SUMMARY

According to a first aspect of this specification, there is described a computer implemented method comprising receiving, via a user device, a user query, and determining location information indicating a location or relating to a location. The method comprises retrieving one or more location profiles based on the location information. A location profile is associated with a respective geographic area and comprises a set of parameter modifications to parameters of a base machine-learning model. The method comprises applying the set of parameter modifications of the one or more retrieved location profiles to the base machine-learning model to obtain a modified machine-learning model and processing the user query using the modified machine-learning model to generate a response to the user query. The response to the user query is output via the user device.

The location information may relate to a state of the user device. The location information may comprise a current location of the user device. The location information may comprise a past and/or future location of the user device. The location information may comprise a default location of the user device. The location information may comprise a location derived from the user query.

In some implementations, retrieving one or more location profiles based on the location information comprises retrieving a plurality of location profiles. Applying the set of parameter modifications of the one or more retrieved location profiles to the base machine-learning model may comprise: determining a respective weight for each set of parameter modifications in the plurality of location profiles based on a respective distance of the geographic area associated with the respective location profile from the location indicated by the location information; and combining the sets of parameter modifications in the plurality of location profiles based on the respective weights for each set of parameter modifications.

Combining the set of parameter modifications in the plurality of location profiles based on the determined weightings may comprise performing a weighted sum of the sets of parameter modifications in the plurality of location profiles. The weights of the weighted sum may vary linearly with the distance from the location indicated by the location information. Alternatively, a nonlinear function may be applied to the distance from the location indicated in the location information to determine the weights. The distance of each profile may be a distance from a centroid of the respective geographic area to the user location. Alternatively, the distance of each profile may be a distance from the closest point of the respective geographic area to the user location. In some examples, a machine-learning model is applied to determine the weights, e.g., a simple/lightweight neural network that processes location data for the location profiles to determine a weight.

Retrieving the plurality of location profiles may comprise retrieving location profiles associated with geographic areas within a threshold distance of the location of the user device. Retrieving the plurality of location profiles may comprise retrieving a first location profile corresponding to a first geographic area in which the user device is located and one or more further location profiles corresponding to respective geographic areas neighbouring the first geographic area. Retrieving the plurality of location profiles may comprise one or more next-nearest neighbour location profiles corresponding to respective geographic areas neighbouring the neighbouring geographic areas of the user location.

The method may further comprise: subsequent to receiving the user query, determining that the user query is related to a user location. Retrieving the one or more location profiles and applying the set of parameter modifications of the one or more retrieved location profiles to the base machine-learning model may be performed in response to determining that the user query is related to the user location. Determining that the user query is related to a user location may be based on a response to an explicit request output to a user via the user device. Alternatively, the base machine-learning model may be used to determine whether a query is related to a user location. Alternatively, a pre-trained classifier may be used to determine whether a query is related to a user location.

The base machine-learning model may be stored on the user device. Retrieving the one or more location profiles based on the location indicated by the location information may comprise determining that the location indicated by the location information does not correspond to a respective geographic area associated with any of one or more locally stored location profiles on the user device. Retrieving the one or more location profiles based on the location of the user device may further comprise determining that the locally stored location profiles do not comprise one or more location profiles corresponding to geographic areas within a threshold distance of the location indicated in the location information. In response to determining that the location indicated by the location information does not correspond to a respective geographic area associated with any of one or more locally-stored location profiles, and/or in response to determining that the locally stored location profiles do not comprise one or more location profiles corresponding to geographic areas within a threshold distance of the location indicated by the location information, the method may comprise requesting, from a server, one or more location profiles associated with respective geographic areas that correspond to the location indicated by the location information, and receiving, from the server, one or more location profiles associated with respective geographic areas that correspond to the location indicated by the location information.

The base machine-learning model and location profiles may be stored at a remote system/server. Receiving, via the user device, the user query may comprise receiving the user query from the user device via a network. Determining the location of the user device may comprise receiving, from the user device and via a network, location information determined by the user device. The method may further comprise transmitting, to the user device and via the network, the response to the user query. The response to the user query may be output via the user device in response to receiving, at the user device, the query response.

According to a second aspect of this specification, there is described a computer implemented method for training location profiles for a base machine-learning model. The

method comprises, for a plurality of training examples: assigning the training example to a respective geographic area in a plurality of geographic areas based on location information associated with the training example and retrieving one or more location profiles based on the location information associated with the training example. Each location profile is associated with a respective geographic area and comprises a set of parameter modifications to parameters of a base machine-learning model. The method further comprises applying the set of parameter modifications of the one or more retrieved location profiles to the base machine-learning model to obtain a modified machine-learning model and processing the training examples using the modified machine-learning model to generate one or more sets of candidate output data. The method further comprises evaluating an objective function based on the one or more sets of candidate output data and updating the set of parameter modifications of the location profile based on the objective function while keeping parameters of the base model fixed.

Retrieving one or more location profiles based on the location information associated with the training example may comprise retrieving a plurality of location profiles within a threshold distance of the location information associated with the training example. Applying the set of parameter modifications of the one or more retrieved location profiles to the base machine-learning model to obtain the modified machine-learning model may comprise determining a weighted sum of parameter modifications from the retrieved plurality of location profiles. A respective weight for each set of parameter modifications may be dependent on a distance of the respective geographic area associated with the respective location profile from the location information associated with the training example, e.g., applying a weight that varies linearly or nonlinearly with the distance from the location indicated in the location information. The method may further comprise applying the weighted sum of parameter modifications to the base machine-learning model.

The method may further comprise determining the plurality of geographic areas based on a distribution of the location information of the training examples.

In the first and second aspects of this disclosure, the one or more sets of parameter modifications to parameters of the base machine-learning model may comprise parameters of one or more pairs of low rank adaption (LoRA) matrices. The product of each pair of LoRA matrices corresponds to, and has the same dimension as, a weight matrix of the base machine-learning model. In the first and second aspects of this disclosure, the geographic area associated with a location profile may be an S2 cell.

In the first and second aspects of this disclosure, the base machine-learning model and modified machine-learning model may be generative models, such as large language models. Such models include large language models (LLMs), vision-language models (VLMs), other multi-modal generative models and/or foundation models. In some implementations, an LLM/VLM can include at least hundreds of millions of parameters. In some of those implementations, the LLM/VLM includes at least billions of parameters, such as one hundred billion or more parameters. In some additional or alternative implementations, an LLM/VLM is a sequence-to-sequence model, is Transformer-based, and/or can include an encoder and/or a decoder. One non-limiting example of an LLM is Google's Pathways Language Model (PaLM). Another non-limiting example of an LLM is Google's Language Model for Dialogue Applications (LaMDA). One non-limiting example of a multi-modal generative model is Google's Gemini model. However, and as noted, it should be noted that the LLMs described herein are one example of generative machine learning models and are not intended to be limiting.

According to a further aspect of this specification, there is described a computer program product comprising computer readable instructions that, when executed by a computer, cause the computer to perform operations comprising any one or more of the methods described herein.

According to a further aspect of this specification, there is described a system comprising: one or more processors; and a memory, the memory storing computer readable instructions that, when executed by the one or more processors, causes the system to perform operations comprising any one or more of the methods described herein.

The systems, methods and apparatus described herein may be realised to implement one or more of the following advantages. The use of location-based profiles that have been fine-tuned on location-specific training examples can allow a base machine-learning model, such as an LLM or other large backbone model, to handle location-specific input data, such as location specific queries in a parameter-efficient manner. Fine-tuning all weights of an LLM is expensive and comes with the overhead of applying many updated weights at inference time. Instead, parameter-efficient fine-tuning (PEFT) techniques allow training a small subset of weights to update the model. Furthermore, a subset of available location profiles that are relevant to a user location can be cached on a user device for offline use. The memory efficiency of location profiles fine-tuned using PEFT can allow such profiles to be stored locally on user devices with limited memory, allowing such devices to provide location-specific machine-learning models without the need to store a separate model for each location.

BRIEF DESCRIPTION OF THE DRAWINGS

Example embodiments will now be described by way of non-limiting example, with reference to the accompanying drawings, in which:

FIG. 1 shows an overview of an example method for processing a user query using location profiles for a machine-learning model;

FIG. 2A shows an overview of an example system for processing a user query using location profiles for a machine-learning model;

FIG. 2B shows an overview of a further example system for processing a user query using location profiles for a machine-learning model;

FIG. 3 shows an overview of an example system for training location profiles for a machine-learning model;

FIG. 4 shows a flow diagram of an example method for processing a user query using location profiles for a machine-learning model;

FIG. 5 shows a flow diagram of an example method for training location profiles for a machine-learning model; and

FIG. 6 shows a schematic example of a system/apparatus 600 for performing any of the methods described herein.

DETAILED DESCRIPTION

AI-based assistants, such as LLM-based assistants, are rapidly growing in terms of popularity and usage. Such assistants can already resolve many queries and in many cases help users to find answers and information more quickly. In the future, such assistants will become even more popular as they become able to handle a larger and broader set of questions posed by users.

Location-specific queries represent an important type of query that can be input into an automated assistant. Consider, for example, the queries:

- "How common are traffic delays in this area?"
- "Were there any accidents in this area recently?"
- "Which borough of London am I in?"
- "How safe at night is the area I'm in?"
- "Are there any good pizza restaurants nearby?"

All of these queries depend on the location of a user and cannot be answered by a current out-of-the-box machine-learning model. Current AI assistants perform poorly at handling such location-specific queries. At the heart of the problem is the difficulty of using location data/information, such as the GPS signal, directly. Models that work primarily on language find it difficult to understand location data and determine how it relates to locations that are described in text form.

The systems, methods and apparatus described herein utilise location-fine-tuning profiles to make it possible for language-based machine-learning models to understand what training data is relevant to a given location, and thus be able to answer location-specific queries. To enable a base machine-learning model, such as an LLM, VLM or multi-modal generative model, to utilize relevant local information, training examples are partitioned by location and location profiles are trained for different areas/cells of a map. The partitioning is, in some examples, performed using an S2 geometry (i.e. splitting up the map into S2 cells). In some examples, at inference time, multiple trained location profiles can be overlapped to let the machine-learning model incorporate knowledge from close-by locations.

While the methods, systems and apparatus disclosed herein are described in relation to location profiles, it will be appreciated that fine-tuning profiles relating to other properties may alternatively or additionally be used. For example, the fine-tuning profiles may relate to one or more of: user interests; user identities; topics; and/or the like.

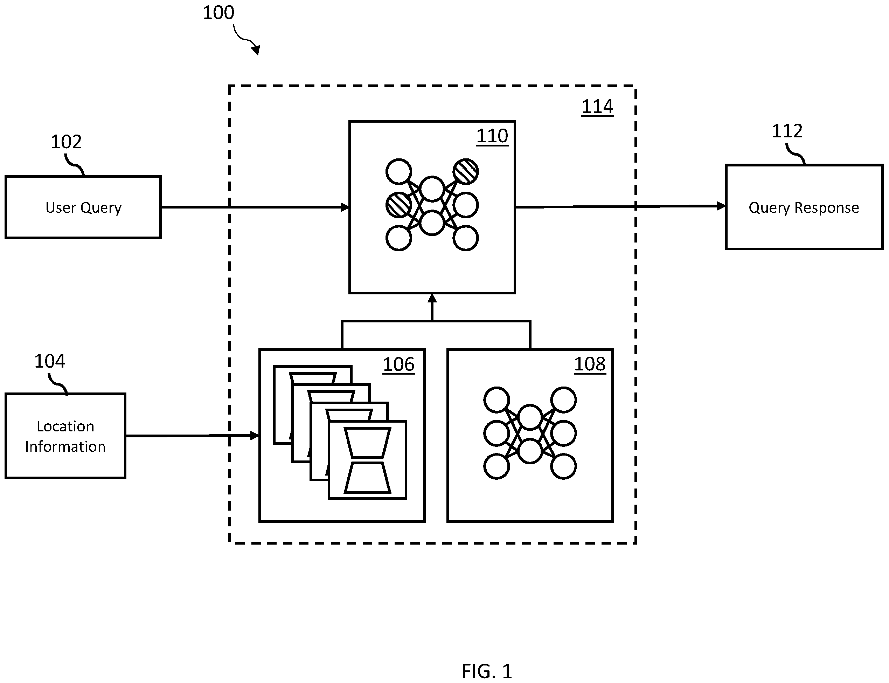

FIG 1 shows an overview of an example method 100 for processing a user query 102 using location profiles for a machine-learning model. A user query 102 is received via a user device, and location information 104 indicative of a location is determined. Based on the location information 104, one or more location profiles 106 (also referred to herein as "fine-tuning profiles") for a base machine-learning model 108 are retrieved. The location profiles 106 each comprise location-specific modifications to the base machine-learning model 108. The retrieved location profiles 106 are applied to the base machine-learning model 108 to generate a modified machine-learning model 110. The user query 102 is then processed using the modified machine-learning model 110 to generate a response 112 to the user query 102. The response 112 to the user query 102 is the output to the user via the user device. In some implementations, the method 100 is performed by machine-learning engine 114 residing at least in part on the user device, a remote server and/or the cloud.

The user query 102 can, in some implementations, be a natural language query input into a user device, e.g., via an automated assistant application. The user query 102 may relate to a user location, either explicitly (e.g., "What are the traffic rules at my location?" or "Are there any accidents near my location") or implicitly (e.g., "What are the traffic rules?" or "Are any accidents nearby?"). In some examples, the natural language query is input as a text query via a user interface, for example using a touch screen or keyboard. In some examples, the natural language query is input as a voice query is a microphone associated with the user device. The user device processes the voice query using a speech-to-text model to generate a text version of the input query 102.

The user query 102 can, in some implementations, be an image query, i.e., comprise one or more images. The one or more images may be images captured by a camera associated with the user device. The user query 102 can, in some implementations, be a video query, i.e., comprise one or more video clips. The one or more videos may be videos captured by a camera associated with the user device. The user query 102 can, in some implementations, be an audio query, i.e., comprise one or more audio samples. The one or more audio samples may be audio samples captured by a microphone associated with the user device.

In some examples, the user query 102 is a multi-modal query. The multi-modal query comprises data in two or more modalities, e.g., one or more additional modalities in addition to natural language. For example, the multi-modal query further comprises one or more images that relate to the natural language query. Alternatively or additionally, the multi-modal query further comprises one or more video clips that relate to the natural language query. Alternatively or additionally, the multi-modal query further comprises one or more video clips that relate to the natural language query. Alternatively or additionally, the multi-modal query further comprises one or more audio samples that relate to the natural language query.

In some implementations, the user query 102 is processed to determine whether the query 102 relates to a location. For example, keyword recognition can be performed on the user query to determine whether it contains any location-related keywords, e.g., "here", "my location", "nearby", or the like, or if it references a specific location, e.g., "Paris", "London", or the like. If a location-related keyword is identified, the user query 102 is determined to relate to a user location. Alternatively or additionally, the user query 102 can be input into a language model, such as the base model 108, along with a request to determine whether the user query 102 relates to a user location. For example, a request can be appended to the query to generate a prompt, e.g., "Does this query relate to a location: [user query]" can be input into the base model 108. The base model 108 processes the input prompt to generate output indicative of whether the query 102 relates to a user location or not, e.g., "This query relates to a user location" or "This query does not relate to a user location". In some implementations, the user query 102 is processed by a dedicated classifier model (not shown) to determine if the user query 102 relates to a location.

In some examples, the method 100 determines that the query is a location-based query based on contextual data. For example, if a mapping application is open on a user device, or if the query is submitted via a mapping application, the method 100 infers that the query is location based.

In some examples, the method 100 comprises requesting the user to indicate whether the query is location-based. For example, when the query is input via an automated assistant, the automated assistant outputs a natural language request (e.g., visually via a graphical user interface, GUI, or audibly via a speaker) for the user to indicate whether the query is location based. The user can supply responsive data indicating that the query is location based or not location based (e.g., via the GUI or aurally via a microphone of the user device).

Alternatively, the method 100 can run inference on the input query using both the base machine-learning model 108 and a modified machine-learning model 110 that has been modified with one or more location profiles 106, e.g., a predefined location profile, or the most recently used location profile(s) 106. If the respective outputs of these two inference passes differ from one another by more than a threshold amount, then the method 100 determines that the query is location-based.

In response to determining that the user query 102 does not relate to a location, the user query is processed by the base machine-learning model 108 to generate a query response 112 without applying any location profiles.

In response to determining that the user query 102 does relate to a user location, the method 100 proceeds by adapting the base machine-learning model 108 with retrieved location profiles 106 based on the location information 104.

In some alternative implementations, the method 100 applies location profiles 106 to the base machine-learning model 108 for all queries.

The location information 104 can be any information indicative of the location of the user device and/or a location to which the query relates. The location information may relate to a state of the user device. For example, the location information 104 may be satellite-based location information, such as Global Positioning Satellite location information, for the location of the user device or a location explicitly referred to in the user query. Alternatively or additionally, the location information 104 may be a postal code/ZIP code, a city name, a location/attraction name or the like. Many other examples are possible. The location information 104 is, in some examples, derived from sensors and/or location services on the user device. Alternatively or additionally, in some examples, the location information 104 can be derived from the user query. The location information 104 can, in some examples, relate to a past and/or future location of the user device.

One or more location profiles 106 are selected from a set of location profiles based on the location information 104. Each location profile 106 relates to a respective geographic area, e.g., an area on the surface of the Earth. The geographic areas may alternatively be referred to herein as "cells".

For example, each location profile 104 is associated with a respective one or more S2 cells. In some examples, each location profile is associated with a single respective S2 cell. In some examples, one or more of the location profiles is associated with a respective plurality of S2 cells. An S2 cell is a quadrilateral on the surface of a sphere (e.g., the Earth) that is bounded by four geodesics. S2 cells can be recursively decomposed into a hierarchy of cells by dividing each S2 cell into four "child" S2 cells until a target resolution is obtained, generating a hierarchy of S2 cells. The largest S2 cells are at the top of the hierarchy, with smaller S2 cells occupying lower levels of the hierarchy. Examples of S2 cells are described in the S2 Geometry Library (http://s2geometry.io/), the contents of which are incorporated herein by reference.

In some examples, a fixed level of the S2 hierarchy is used for the location profiles, i.e., every location profile 106 is associated with an S2 cell at the same, predefined level of the S2 hierarchy. Alternatively, the location profiles 106 may in general be associated with S2 cells at different levels of the hierarchy, e.g., one or more location profiles 106 are associated with respective S2 cells in a first level in the S2 hierarchy, and a further one or more location profiles 106 are associated with respective S2 cells in a second level in the S2 hierarchy that is different to the first level. This can allow the location profiles 106 to be "denser" in more populated areas (e.g., cities) than in less populated areas (e.g., in a desert, or in an ocean).

Other methods may alternatively be used to define the geographic areas associated with each location profile 106. For example, postal/ZIP codes, city/town names and/or other location names may be used to define the geographic areas.

The base machine-learning model 108 is a pretrained machine-learning model configured to perform a machine-learning task. In some examples, the machine-learning task is a generative task, i.e. the machine-learning model is a generative model. The generative model may, for example, be a large language model (LLM) configured to receive input comprising natural language input and process it to generate output data comprising natural language output.

Alternatively, the machine-learning task is an audio classification task. In such examples, the base machine-learning model 108 can take as input one or more audio samples and process them to generate output data comprising a probability distribution over a plurality of predefined audio classes.

Alternatively, the machine-learning task is an image or video classification task. In such examples, the base machine-learning model 108 can take as input one or more images or videos (i.e. a sequence of images) and process them to generate output data comprising a probability distribution over a plurality of predefined image-/video classes.

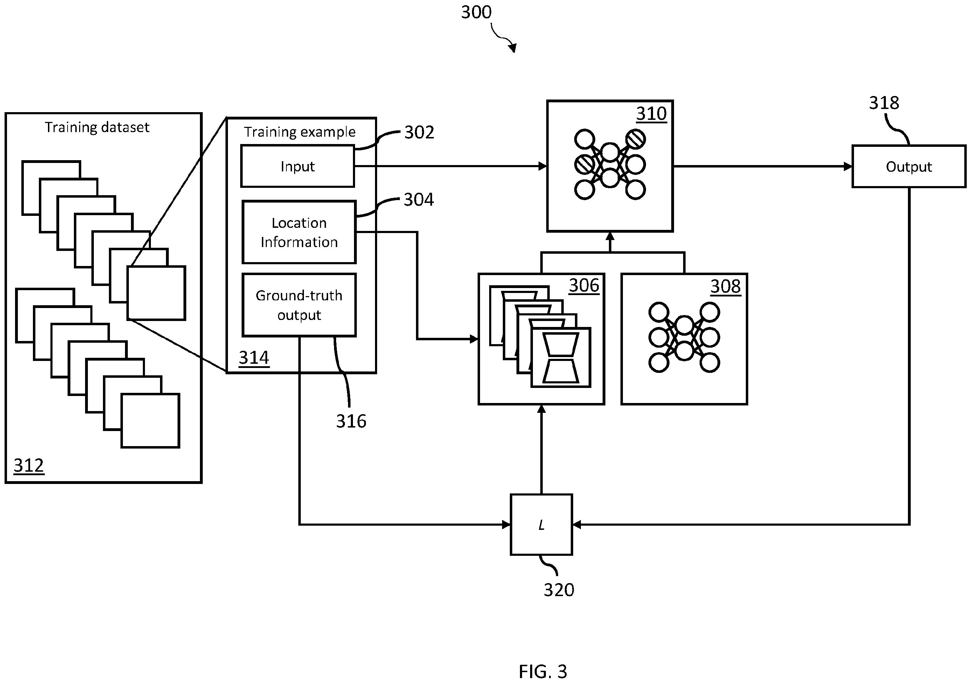

Each location profile 106 comprises a set of parameter modifications to the base machine-learning model 108 that are based on fine-tuning the base machine-learning model 108 on data relating to the respective geographic area/cell associated with that location profile 106. Examples of such fine-tuning are described herein in relation to FIG. 3.

The location profiles 106 may have been generated based on parameter-efficient fine-tuning (PEFT) techniques. Consequently, the location profiles 106 may also be referred to as "PEFT" profiles. PEFT can adapt a base machine-learning model, such as a backbone model and/or large language model, to a specific task or domain using a small number of additional parameters (e.g., relative to the number of parameters of the base model). PEFT techniques include additive PEFT, selective PEFT, reparameterized PEFT, or hybrid PEFT, which combines features of the other PEFT techniques.

Additive PEFT is based on using one or more adapters that process input data in parallel to respective layers of the base model to generate additional layer output that is combined with the output of the respective layers of the base model. In examples using additive PEFT, the location profiles 106 each comprise a respective one or more adapters that have been trained on training examples associated with the geographic area of the location profile.

Selective PEFT is based on fine-tuning only a subset of parameters of the base model, while keeping other parameters of the base model fixed. In examples using additive PEFT, the location profiles 106 each comprise a respective set of parameters for the subset of parameters that have been derived by training on training examples associated with the geographic area of the location profile. In some examples, the set of parameters may be in the form of replacement parameter values. Alternatively, the set of parameter values may be in the form of values to be added to the parameters of the base model, i.e., "delta" values.

Reparametrized PEFT introduces further low-rank trainable parameters during fine-tuning, which are then combined with the base machine-learning model at inference time. In examples using additive PEFT, the location profiles 106 each comprise a respective one or more sets of low-rank parameters that have been determined by fine-tuning the low-rank parameters on training examples associated with the geographic location of the location profile 106.

An example of reparameterized PEFT is low-rank adaptation (LoRA). LoRA is based on leaning one or more sets of parameter updates, $\Delta W$, to a respective one or more weight matrices, $W_0$, of the base model, such that $W = W_0 + \Delta W$, where W is the weights of a weight matrix of the modified machine-learning model. The set of parameter updates, $\Delta W$, is decomposed into two low-rank matrices, A and B, such that $\Delta W = BA$. In this case, the rank of a matrix refers to the number of linearly independent vectors, e.g., the sum of columns or rows within the matrix decomposition BA that do not contain correlative data. The rank determined specifies the dimensionality of the update needed by providing a constraint on the dimensions of the two smaller matrices. For example, in the case in which $W$ is a matrix of dimension d × k, $B$ is a matrix of dimension d × r and $A$ has dimension r × k, where r must be the same to enable the matrix multiplication, the rank r can be a value much less than the minimum of d and k, e.g., $r \ll \min(d, k)$. During training, the system learns the weights in matrices 8 and A instead of directly learning the weights in $\Delta W$.

To generate the modified machine-learning model 110, the method 100 uses the location information to identify and retrieve one or more location profiles 106, then applies the one or more retrieved location profiles 106 to the base machine-learning model 108. The location profile 106 corresponding to the current location of the user device, as indicated by the location information 104, is identified and retrieved. For example, the S2 cell containing the user device location is identified, and the corresponding location profile 106 retrieved.

In some implementations, one or more further location profiles are retrieved based on the user device location. For example, the location profiles 106 of locations within a predefined threshold distance, max_distance, of the user location are retrieved. In some examples, the number of location profiles retrieved is capped at a predefined number, $N$, i.e., the $N$ nearest location profiles 106 within the threshold distance are retrieved.

Alternatively, the one or more further location profiles are location profiles associated with geographic areas neighbouring (e.g., nearest neighbouring) the geographic area in which the user device is located, e.g., neighbouring S2 cells. In some implementations, next-nearest neighbouring geographic areas also have their respective location profiles retrieved.

The retrieved one or more location profiles 106 are applied to the base machine-learning model 108 to generate the modified machine learning model 110. In examples where a plurality of location profiles 106 are retrieved, the sets of parameter modifications of the retrieved location profiles 106 are combined and applied to the base machine-learning model 108. In some implementations, combining the sets of parameter modifications comprises averaging the sets of parameter modifications. The averaging process is, in some examples, a weighted average of the sets of parameters, where the weights are based on a distance of the respective geographic location of each location profile from the user device location. For example, overall parameter modifications, $\Delta W$, for a weight matrix of the base machine-learning model 108 can be given by:

$$\Delta W = \sum_i \alpha_i \Delta W_i$$

where $\alpha_i$ is the weight associated with location profile $i$, $\Delta W_i$ is the set of parameter modifications associated with weight profile $i$, and the sum is taken over the set of retrieved location profiles. In some examples, the weights vary linearly with the distance of the user device from the geographic area. Alternatively, in some examples, a non-linearity is applied to the distance of the user device from the geographic area, e.g., a quadratic function. This can further boost the impact of closer geographic areas on the modified models 110. In some examples, the function used to calculate the weighting can be determined via hyperparameter tuning during training. In some examples, the weights are normalised such that a sum of the weights is a predefined value, e.g., normalised to one. Alternatively, the weights may be unnormalised. The weighting method used corresponds to the weighting method used when training the location profiles 106.

In some examples, the distance used for the weighting calculation for a geographic area is a distance from the user location (or the centre of the current geographic location in which the user device is located) to the centre of that geographic area, e.g., the distance to the S2 centroid is used to determine the weight in the averaging of the location profiles. Alternatively, the distance used for the weighting calculation for a geographic area is a distance from the user location to the nearest point of that geographic area.

The user query 102 is then processed by the modified machine-learning model 110 to generate a query response 112 that is tailored to the user location.

In some examples, method 100 can determine that a query 102 relates to a difference between two locations, either implicitly or explicitly, e.g., between a current location of the user and a default location of the user. For example, a query 102 may be "What are the traffic rules here?" or "How do the traffic rules here differ from where I live?". Using a single location, the modified machine-learning model 310 may generate a long list of rules. However, much more relevant to the query 102 is the rules that differ from the current location of the user and the usual location of the user. Given the user's typical location (e.g. around Zurich) and the current location (e.g. in Iceland), the method can run two location-specific inference queries, one using the current location and one using the usual location, each generating a respective natural language output. A summary of the differences is then generated by the two natural language outputs. For example, the two natural language outputs are then input to the base machine-learning model 308 with a prompt requesting a of the difference of the locations. The base machine-learning model 308 processes this input to generate a natural language summary of the differences between the two locations.

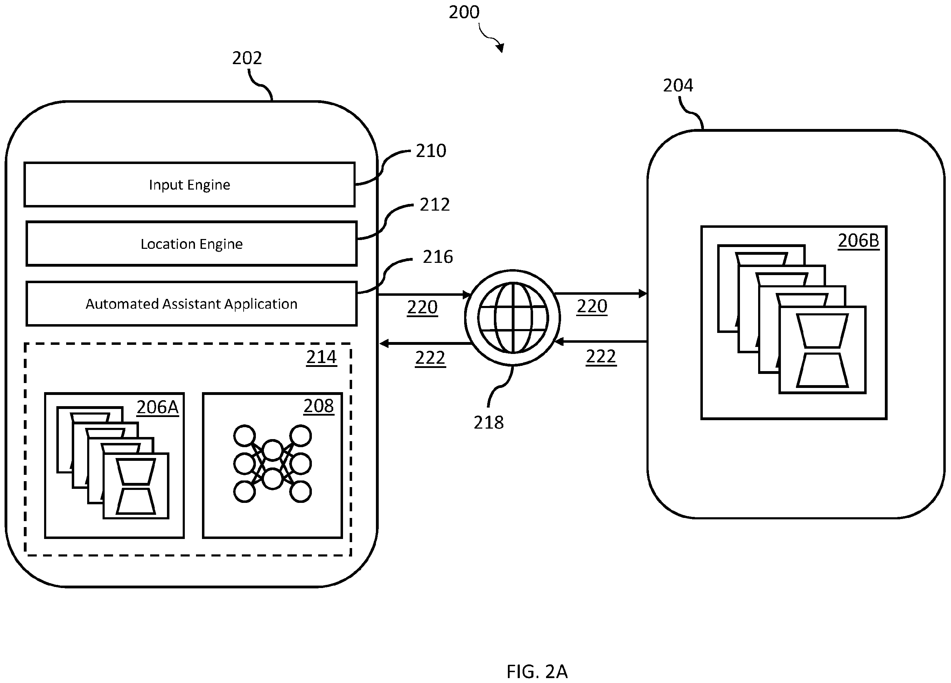

FIG. 2A shows an overview of an example system 200 for processing a user query using location profiles for a machine-learning model. The system comprises a user device 202 and remote system 204 (e.g., a server or cloud-based system). The user device 202 and server 204 may be connected via network 218. In the example shown, the user device 202 stores a copy of the base machine-learning model 208 locally in a memory of the user device. Furthermore, the user device 202 stores a set of location profiles 206A that is a subset of the overall location profiles available to the user device 202. For example, the k most recently used location profiles 206A are be stored on the user device 202 and/or a set of the *l* most often used location profiles 206A by the user device 202 are be stored on the user device 202.

The user device 202 can be, for example, one or more of: a desktop computer, a laptop computer, a tablet, a mobile phone, a computing device of a vehicle (e.g., an in-vehicle communications system, an in-vehicle entertainment system, an in-vehicle navigation system), a standalone interactive speaker (optionally having a display), a smart appliance such as a smart television, and/or a wearable apparatus of the user that includes a computing device (e.g., a watch of the user having a computing device, glasses of the user having a computing device, a virtual or augmented reality computing device). Additional and/or alternative user devices may be provided.

The user device 202 further comprises a user input engine 210 that is configured to detect user input provided by a user of the user device 202 using one or more user interface input devices. Such user interface input devices comprise, for example, a keyboard, a touch screen, a mouse, a microphone, one or more buttons, or the like. A user of the user device 202 can input a user query to an automated assistant application 216 residing on the user device 202 via the input engine 210.

The user device 202 further comprises a location engine 212. The location engine 212 is configured to determine a location of the user device 202. The location engine, in some examples, used satellite-based signals, such as GPS signals, to determine a location of the user device 202. Other location determination methods may alternatively or additionally be used by the location engine.

The user device further comprises a machine-learning engine 214 comprising the base machine-learning model 208 and the subset of location profiles 206A.

When the user device 202 receives a location-based query, the user device 202 determines the user location using the location engine 212. The user device 202 checks whether the determined location corresponds to any of the locally stored location profiles 206A, e.g., whether the user location falls within a geographic area associated with any of the location profiles 206. In some examples, the user device 202 further determines whether the locally stored location profiles 206A include all profiles within a threshold distance of the user location, or at least N profiles within the threshold distance of the user location. In some examples, the user device 202 alternatively or additionally determines whether the locally stored location profiles 206A include all neighbouring (and in some examples, next nearest neighbouring) profiles to the user location.

If the user location corresponds to a locally stored location profile (and, in some examples, if other location profiles required by the method are also locally stored), then the user device 202 proceeds with generating a response to the user query using the locally stored location profiles 206A and the base machine-learning model 208, as described in relation to FIG. 1. The response can be output via a user interface of the assistant application 216.

If the user location does not correspond to a locally stored location profile, or if the other location profiles required by the method are not locally stored, then the user device 202 transmits a request 220 to the remote system 204 via the network 218. The request 220 is a request for the location profiles required, based on the user device 202 location. The required profiles may be identified explicitly or implicitly. For example, the request 220 may comprise the user location. The remote system 204 determines which location profiles are required by the user device 202 based on the user location, e.g., by determining the location profiles corresponding to geographic areas within a threshold distance of the user device 202 location, or location profiles corresponding to the geographic area containing the user device 202 location and neighbouring/next-nearest neighbouring areas. The request may alternatively or additionally comprise data indicating the location profiles 206 requested by the user device 202, e.g., identifiers of the geographic areas that the user device 202 is requesting location profiles for.

In response to receiving the request 220, the remote system 204 retrieves one or more further location profiles from a repository of location profiles 206B accessible to the remote system 204, e.g., stored at the remote system 204. The retrieved one or more location profiles correspond to the location profiles requested by the user device 202. The remote system 204 transmits a response message 222 containing the retrieved location profiles to the user device 204 via the network 218.

The user device 202 receives the response message 222 and adds the retrieved location profiles to the locally stored location profiles 206A. In some examples, the retrieved location profiles replace one or more of the locally stored profiles 206A. For example, if m location profiles are received, then the m least-used locally stored location profiles 206A are replaced by the retrieved location profiles.

The user device 202 then proceeds with generating a response to the user query using the locally stored location profiles 206A, including the newly retrieved location profiles, and the base machine-learning model 208, as described in relation to FIG. 1. The response can be output via a user interface of the assistant application 216.

In some examples, the user device 202 location can be monitored periodically, and relevant location profiles downloaded from the remote server 204 in response to determining that the user device has moved out of the locations covered by the locally stored location profiles 206A.

In this manner, a user device 202 with a limited memory space can take advantage of the location-based tailoring of the methods described herein. Since the location profiles 206 typically have a small memory footprint, multiple location profiles 206 can be stored locally on the user device 202, given the user device 202 the ability to adapt the base machine-learning model 208 to the most frequently and/or most recently used user locations without requiring further network communication.

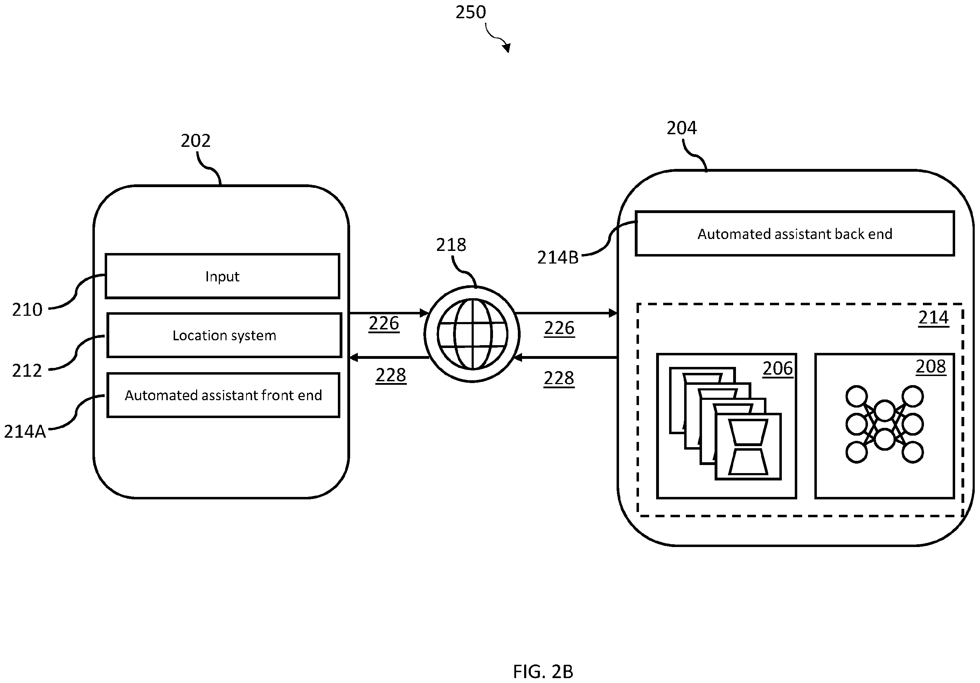

FIG. 2B shows an overview of a further example system 250 for processing a user query using location profiles for a machine-learning model. The system comprises a user device 202 and remote system 204 (e.g., a server or cloud-based system). The user device 202 and server 204 may be connected via network 218. In the example shown, the base machine-learning model 208 and the location profiles 206 are stored at the remote system 204.

The user device 202 comprises an input engine 210 and a location engine 212, as described in relation to FIG. 2A. The user device further contains an automated assistant application front-end that can interface with an automated assistant back-end located at a remote system 204/the cloud.

When the user device 202 receives a location-based query, the user device 202 determines the user location using the location engine 212. The user device 202 transmits a message 226 to the remote system 204 via the network 218. The message 226 comprises the user query and the user location. The remote system 204 receives the message and uses the user query and user device 202 to generate a response to the user query using the location profiles 206 and base machine-learning model 208 stored at the remote system 204, e.g., using the method(s) described in relation to FIG. 1.

The remote system 204 transmits a response message 228 to the user device 202 via the network. The response message 228 comprises the response to the user query. In response to receiving the response message 228, the user device 202 outputs the response to the user query, for example via the user interface of the automated assistant front-end.

In this manner, a user device 202 with a limited memory space and processing power can take advantage of the location-based tailoring of the methods described herein. The remote system 204 can typically store a large number of location profiles when compared to the user device 202, as well as having enough processing power to execute larger base machine-learning models 208 than the user device 202 can execute locally.

FIG. 3 shows an overview of an example method 300 for training location profiles 306 for a base machine-learning model 308. The method 300 may be performed by one or more computing systems operating in one or more locations.

The base machine-learning model 308 is pre-trained on a set of training data. Any relevant method known in the art can be used to train the base machine-learning model 308. Subsequently to training the base machine-learning model, the method 300 is used to train location profiles 306 for the base machine-learning model 308.

The method 300 uses a set of training dataset 312 (also referred to as a "fine-tuning dataset") comprising a plurality of training examples 314. The training dataset 306 may comprise training examples 314 from the training dataset on which the base machine-learning model 308 was trained. Alternatively or additionally, the training dataset 306 may comprise training examples 314 that were not present in the training dataset on which the base machine-learning model 308 was trained. Each training example 314 comprises a respective set of input data 302 for the machine-learning model, a respective location 304, and a respective set of ground truth output data 316.

In some examples, the location 304 for each training example is not provided in the raw training dataset 312. Instead, the method 300 iterates through the training examples 314 to determine whether each training example has a respective location 304 associated with it. Some training examples will not be location-specific, e.g. maths knowledge or literature knowledge. Such training examples will be filtered out from the fine-tuning dataset 312. Other training examples will, however, contain references to physical places, either explicitly and/or implicitly. Such training examples can be found by, for example, an entity detection model, similar to how Google local search finds out which websites are relevant to a particular local context. Such training examples may alternatively or additionally be identified based on metadata and/or contextual data associated with the training example. These location-related training examples can each be assigned respective location information, e.g., a GPS location and/or other map reference. In some implementations, one or more of the training examples may be associated with an area rather than with a single specific location, e.g., "Paris".

The result of this location identification process is a training dataset 312 of training examples 314 that are tagged with respective location information, e.g., GPS coordinates, areas, or other map references.

The training examples 314 can then be mapped to respective geographic areas. For example, each training example 314 is mapped to a respective one or more S2 cells. The mapping can be performed using an S2 segmentation algorithm, e.g., the cells are recursively split based on how many data points (i.e., training examples 314) correspond to them. In some implementations, it is possible that some training examples 314 show up in multiple geographic areas (e.g., S2 cells), for example, when a training example 314 is tagged with an area, such as "Paris" or "France". In some examples, a fixed level for the S2 cells is used. Alternatively, the method 300 may train the location profiles 306 on multiple S2 granularities at once. Alternatively, the method 300 may dynamically pick the granularity based on a population density (e.g., the number of entities and/or the number of training examples) in each S2 cell, e.g., when the number of entities and/or training examples exceeds a threshold number, the cell is split.

The training dataset 312 is used to train a location profile 306 for each of a plurality of geographic areas (e.g., S2 cells). The location profiles 306 can, in some implementations, be trained using parameter-efficient fine-tuning (PEFT) techniques and can thus be referred to as PEFT profiles.

To do this, the method iterates over a plurality of location-tagged examples 314 in the training dataset 312. The method 300 comprises determining one or more geographic areas relevant to the location of the training example 314 and retrieving the respective one or more location profiles 306 corresponding to the determined one or more geographic locations. Each location profile comprises a set of parameter modifications to the base machine-learning model 308, e.g., one or more sets of LoRA matrices, one or more adapters, or the like, as described in relation to FIG. 1.

In some implementations, a single location profile 306 that corresponds to the geographic area containing the location indicated by the location information 304 is retrieved. The parameter modifications of the location profile 306 are applied to the base machine-learning model 308 to generate a modified machine-learning model 310, as described in relation to FIG. 1.

In some implementations, a plurality of location profiles 306 corresponding to geographic areas within a threshold distance of the location associated with the training example 314 are retrieved. In some such examples, the maximum number of retrieved location profiles 306 is limited using an additional hyperparameter, i.e., a maximum number of location profiles, N.

Alternatively, a plurality of location profiles 306 that comprise a first geographic area containing the location indicated in the location information 304 and one or more neighbouring geographic areas, e.g., geographic areas immediately bordering the first geographic area. The plurality of location profiles 306, in some examples, further comprises one or more neighbouring geographic areas, e.g., geographic areas immediately bordering the neighbouring geographic areas that are not either the first geographic area or another neighbouring geographic area. In some such examples, the maximum number of retrieved location profiles 306 is limited using an additional hyperparameter, i.e., a maximum number of location profiles, N.

In some implementations, the plurality of location profiles 306 are averaged and applied to the base machine-learning model 308 to generate a modified machine-learning model 310, as described in relation to FIG. 1. The average is, in some examples, a weighted average based on the distance of the profile to the distance indicated by the location information 304. This location-weighted combination is then overlaid on top of the base machine-learning model 308 parameters, e.g., added to them, to generate the modified machine-learning model 310. This can allow the location profiles to learn location-specific information. Note that some information might be relevant to close-by geographic areas, e.g., if an accident happened on a certain street that is close to another S2 cell, then this is relevant information for those profiles, too. Weighting can allow that information to appropriately influence the parameters of the profile of the geographic area.

The input data 302 of the training example 314 is then processed by modified machine-learning model 310 to generate a candidate output 318. The candidate output 318 is compared to the ground-truth output 316 of the training example 314 using a loss/objective function. The loss/objective function 320 can be any relevant loss function known in the art. For example, for fine-tuning a base machine-learning model 308 that is an LLM, a classification loss, such as cross-entropy loss, can be used.

An optimization routine is applied to the loss function 320 to determine parameter updates to the parameter modifications of the location profiles 306, while keeping the parameters of the base model 308 fixed. The optimization routine may, for example, be a gradient-based optimization routine, such as stochastic gradient descent. Backpropagation is, in some examples, used to determine gradients of the loss function with respect to parameter values of the location profiles and the base machine-learning model. The weighting used to combine the location profiles is, in some examples, also applied in the backpropagation step, meaning that the closer a geographic area is to the location associated with the training example, the more impact the training has on it.

For example, in some implementations, method 300 uses the low-rank approximation (LoRA) to approximate an update to the one or more weight matrices of the base machine-learning model 308 during each training update, while keeping the weights of the base model itself fixed. LoRA is based on applying an optimization routine to a product of two smaller matrices, A and B, whose product has the dimensionality of the full weight matrix, in order to reduce the dimensionality of the calculation required to compute the change in weights required by the update. Thus, during training, the system learns the weights in matrices 8 and A instead of directly learning the weights in $\Delta W$.

The method may be repeated until a threshold condition is satisfied. The threshold condition may, for example, be a convergence condition on values of the parameter modifications of the location profiles. Alternatively or additionally, the threshold condition may be a maximum number of training iterations. Alternatively or additionally, the threshold condition may be a threshold performance on one or more test datasets.

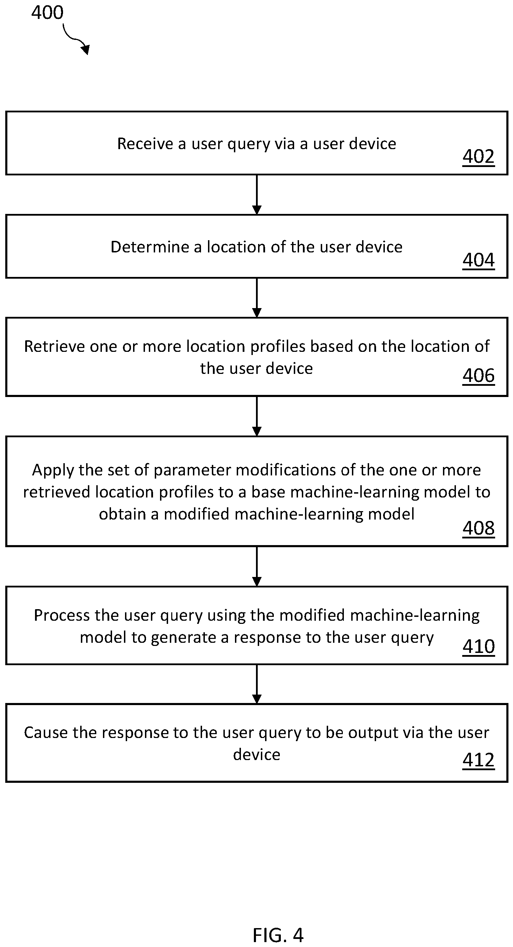

FIG. 4 shows a flow diagram of an example method 400 for processing a user query using location profiles for a machine-learning model. The method 400 is, in some examples, performed by one or more computers operating in one or more locations, for example the user device and/or server described in relation to FIGs. 2A and/or 2B. For convenience, the operations of the method 400 are described with reference to a system that performs the operations. Moreover, while operations of the method 400 are shown in a particular order, this is not meant to be limiting. One or more operations may be reordered, omitted, and/or added.

At operation 402, the system receives a user query via a user device. The query may be a natural language query. In some examples, the query is at least in part received as a text input to the user device, e.g., typed via a user interface. Alternatively or additionally, the query is at least in part received as a spoken input to the user device, e.g., received via one or more microphones associated with the user device.

The system, in some implementations, can perform initial processing on the user query to determine whether the user query relates to a user location. The initial processing is performed after operation 402 or operation 404. A machine-learning model, such as the base machine-learning model, is used by the system to determine whether the user query relates to a user location. If the user query does not relate to a user location, the base machine-learning model processes the user query without performing operation 406 and 408, and in some examples without performing operation 404, i.e., the system processes the user query using the base machine-learning model to generate a response to the user query and causes the response to the user query to be output via the user device.

If the system determines that the user query relates to a user location, the system proceeds with operation 404 (if not performed already), and operations 406-412.

At operation 404, the system determines location information indicating a location associated with the query. The location information may, for example, be the location of the user device. The location of the user device may be determined using any method known in the art, e.g., by location sensors on the user device, such as GPS sensors. The system may receive a user device location from the user device.The location information may, for example, comprise a past and/or future location of the user device. The location information may comprise a location derived from the query, e.g., explicitly or implicitly referred to in teh query.

At operation 406, the system retrieves one or more location profiles based on the location information. Each location profile is associated with a respective geographic area/cell. Each location profile comprises a set of parameter modifications to parameters of a base machine-learning model. The base machine-learning model may be a generative model. The base machine-learning model may be a transformer-based model. The base machine-learning model may be a language model, such as an LLM, configured to receive a sequence of natural language tokens as input and process them to generate an output sequence of natural language tokens. The base machine-learning model may be multi-modal model configured to receive input data in a plurality of modalities, e.g., a sequence of natural language tokens and one or more images/videos, and process them to generate output data in one or more modalities, e.g., an output sequence of natural language tokens and/or an output image/video.

The set of parameter modifications for a location profile is, in some examples, a parameter-efficient fine-tuning (PEFT) profile for the base machine-learning model. For example, a location profile may comprise a low-rank adaption model (LoRA) for the base machine-learning model, e.g., one or more pairs of low-rank adaption matrices.

Each geographic area/cell corresponds to a set of geographic locations, e.g., an area on the surface of the earth. The geographic area may be continuous. In some examples, one or more (e.g., a plurality of, or all of) the geographic areas are S2 cells. Alternatively or additionally, one or more (e.g., a plurality) of the geographic areas are zip/postcode areas, i.e. locations sharing at least a part of their respective postcodes. Alternatively, one or more (e.g., a plurality) of the geographic areas are based on postal/ZIP codes, city/town locations, or the like. Many other examples are possible.

In some implementations, the system retrieves a plurality of location profiles based on the location indicated by the location information. For example, the system retrieves all location profiles that are associated with geographic areas within a threshold distance of the location indicated by the location information, e.g., geographic areas with at least a part of their area within the threshold distance of the location of the user device, and/or geographic areas that are fully within the threshold distance of the location of the user device.

In some alternative implementations, the system retrieves the location profile associated with the geographic area that contains the location indicated by the location information. The system may further retrieve one or more location profiles associated with neighbouring geographic areas, i.e., geographic areas adjacent to the geographic area containing the location indicated by the location information. In some implementations, the system retrieves the location profiles of all neighbouring geographic areas. The system may further retrieve one or more location profiles associated with next-nearest neighbouring geographic areas, i.e., the geographic areas adjacent to the neighbouring geographic areas.

At operation 408, the system applies the set of parameter modifications of the one or more retrieved location profiles to the base machine-learning model to obtain a modified machine-learning model.

In some implementations, applying the set of parameter modifications of the one or more retrieved location profiles to the base machine-learning model comprises determining a respective weight for each set of parameter modifications in the plurality of location profiles. The respective weights for each set of parameter modifications are based on a respective distance of the geographic area associated with the respective location profile from the location of the user device. For example, the wights may be based on a linear distance of the geographic area from the current location of the user device.

The sets of parameter modifications in the plurality of location profiles are then combined based on the respective weights for each set of parameter modifications. For example, a weighted sum/average of the sets of parameter modifications in the plurality of location profiles is taken. The weighted sum is then applied to the base machine-learning model to generate the modified machine-earing model.

At operation 410, the system processes the user query using the modified machine-learning model to generate a response to the user query. The user query is input into the modified machine-learning model, which processes the user query based on the modified values of the parameters of the machine-learning model.

At operation 412, the system causes the response to the user query to be output via the user device.

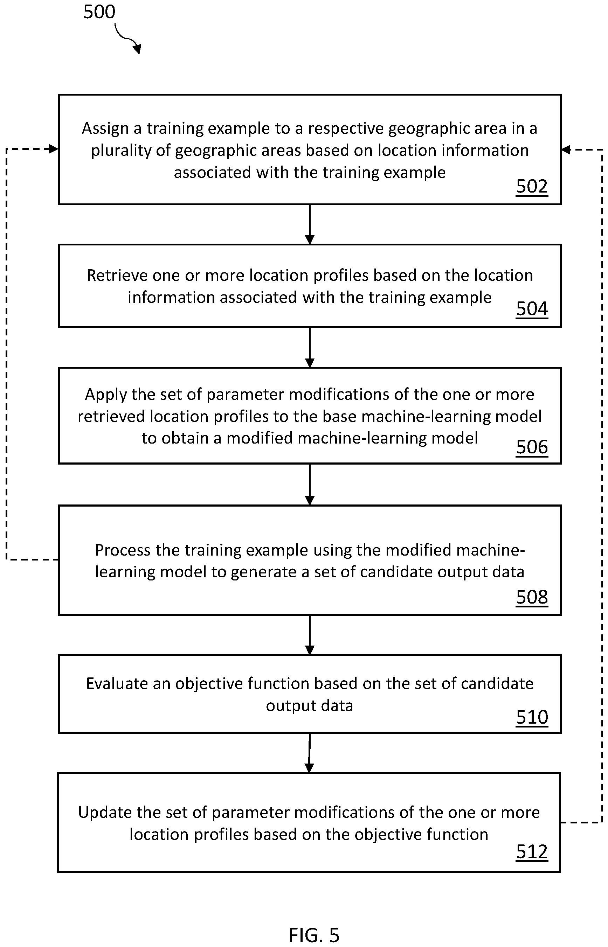

FIG. 5 shows a flow diagram of an example method 500 for training location profiles for a machine-learning model. The method 500 is, in some examples, performed by one or more computers operating in one or more locations, for example the user device and/or server described in relation to FIGs. 2A and/or 2B. For convenience, the operations of the method 500 are described with reference to a system that performs the operations. Moreover, while operations of the method 400 are shown in a particular order, this is not meant to be limiting. One or more operations may be reordered, omitted, and/or added.

At operation 502, the system assigns a training example to a respective geographic area in a plurality of geographic areas based on location information associated with the training example.

At operation 504, the system retrieves one or more location profiles based on the location information associated with the training example. Each location profile is associated with a respective geographic area. Each location profile comprises a set of parameter modifications to parameters of a base machine-learning model. Retrieving location profiles based on location information is described in further detail with respect to operation 406 of FIG. 4.

At operation 506, the system applies the set of parameter modifications of the one or more retrieved location profiles to the base machine-learning model to obtain a modified machine-learning model. Applying the parameter modifications is described in further detail with respect to operation 408 of FIG. 4.

At operation 508, the system processes the training example using the modified machine-learning model to generate a set of candidate output data. Processing an input using the modified machine-learning model to generate a set of output data is described in further detail with respect to operation 410 of FIG. 4.

In some implementations, operations 502 to 508 are iterated over a batch of training data comprising a plurality of training examples to generate a plurality of sets of candidate output data.

At operation 510, the system evaluates an objective function based on the set of candidate output data. In examples where a plurality of sets of candidate output data are generated based on a batch of training data containing a plurality of training examples, the objective function is based on the plurality of sets of candidate output data. The objective function may be any relevant objective function known in the art. For example, the objective function may be a classification loss, such as a cross-entropy loss.

At operation 512, the system updates the set of parameter modifications of the one or more location profiles based on the objective function. Parameters of base model are kept fixed, i.e. no updates are applied to the parameters of the base model. To determine the parameter modifications, an optimization routine, such as stochastic gradient descent, may be applied to the objective function.

In some implementations, operations 502 to 512 are repeated until a threshold condition is satisfied. The threshold condition may be a threshold number of training iteration, convergence of the parameters of the location profiles, and/or a threshold performance being achieved on one or more test/evaluation datasets, e.g., a respective test dataset for each location profile.

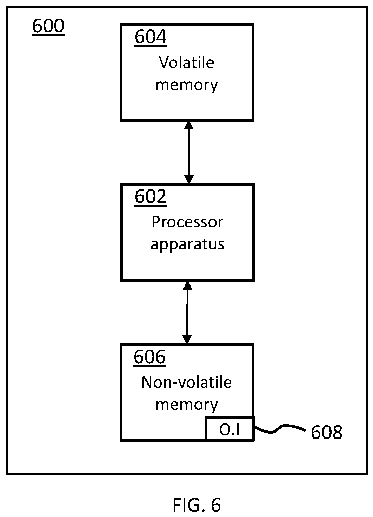

FIG. 6 shows a schematic example of a system/-apparatus 600 for performing any of the methods described herein. The system/apparatus shown is an example of a computing device. It will be appreciated by the skilled person that other types of computing devices/systems may alternatively be used to implement the methods described herein, such as a distributed computing system.

The apparatus (or system) 600 comprises one or more processors 602. The one or more processors control operation of other components of the system/-apparatus 600. The one or more processors 602 may, for example, comprise a general purpose processor. The one or more processors 602 may be a single core device or a multiple core device. The one or more processors 602 may comprise a Central Processing Unit (CPU) or a graphical processing unit (GPU). Alternatively, the one or more processors 602 may comprise specialised processing hardware, for instance a RISC processor or programmable hardware with embedded firmware. Multiple processors may be included.

The system/apparatus comprises a working or volatile memory 604. The one or more processors may access the volatile memory 604 in order to process data and may control the storage of data in memory. The volatile memory 604 may comprise RAM of any type, for example Static RAM (SRAM), Dynamic RAM (DRAM), or it may comprise Flash memory, such as an SD-Card.

The system/apparatus comprises a non-volatile memory 606. The non-volatile memory 606 stores a set of operation instructions 608 for controlling the operation of the processors 602 in the form of computer readable instructions. The non-volatile memory 606 may be a memory of any kind such as a Read Only Memory (ROM), a Flash memory or a magnetic drive memory.

The one or more processors 602 are configured to execute operating instructions 608 to cause the system/apparatus to perform any of the methods described herein. The operating instructions 608 may comprise code (i.e. drivers) relating to the hardware components of the system/apparatus 600, as well as code relating to the basic operation of the system/apparatus 600. Generally speaking, the one or more processors 602 execute one or more instructions of the operating instructions 608, which are stored permanently or semi-permanently in the non-volatile memory 606, using the volatile memory 604 to store temporarily data generated during execution of said operating instructions 608.

Implementations of the methods described herein may be realised as in digital electronic circuitry, integrated circuitry, specially designed ASICs (application specific integrated circuits), computer hardware, firmware, software, and/or combinations thereof. These may include computer program products (such as software stored on e.g. magnetic discs, optical disks, memory, Programmable Logic Devices, non-transitory computer readable media) comprising computer readable instructions that, when executed by a computer, such as that described in relation to Figure 6, cause the computer to perform one or more of the methods described herein.

Any system feature as described herein may also be provided as a method feature, and vice versa. As used herein, means plus function features may be expressed alternatively in terms of their corresponding structure. In particular, method aspects may be applied to system aspects, and vice versa.

Furthermore, any, some and/or all features in one aspect can be applied to any, some and/or all features in any other aspect, in any appropriate combination. It should also be appreciated that particular combinations of the various features described and defined in any aspects of the invention can be implemented and/or supplied and/or used independently.

In this specification, the term "configured" is used in relation to computing systems and environments, as well as computer program components. A computing system or environment is considered "configured" to perform specific operations or actions when it possesses the necessary software, firmware, hardware, or a combination thereof, enabling it to carry out those operations or actions during operation. For instance, configuring a system might involve installing a software library with specific algorithms, updating firmware with new instructions for handling data, or adding a hardware component for enhanced processing capabilities. Similarly, one or more computer programs are "configured" to perform particular operations or actions when they contain instructions that, upon execution by a computing device or hardware, cause the device to perform those intended operations or actions.

The embodiments and functional operations described in this specification can be implemented in various forms, including digital electronic circuitry, software, firmware, computer hardware (encompassing the disclosed structures and their structural equivalents), or any combination thereof. The subject matter can be realized as one or more computer programs, essentially modules of computer program instructions encoded on a tangible non-transitory storage medium for execution by or to control the operation of a computing device or hardware. The storage medium can be a storage device such as a hard drive or solid-state drive (SSD), a storage medium, a random or serial access memory device, or a combination of these. Additionally or alternatively, the program instructions can be encoded on a transmitted signal, such as a machine-generated electrical, optical, or electromagnetic signal, designed to carry information for transmission to a receiving device or system for execution by a computing device or hardware. Furthermore, implementations may leverage emerging technologies like quantum computing or neuromorphic computing for specific applications, and may be deployed in distributed or cloud-based environments where components reside on different machines or within a cloud infrastructure.

The term "computing device or hardware" refers to the physical components involved in data processing and encompasses all types of devices and machines used for this purpose. Examples include processors or processing units, computers, multiple processors or computers working together, graphics processing units (GPUs), tensor processing units (TPUs), and specialized processing hardware such as field-programmable gate arrays (FPGAs) or application-specific integrated circuits (ASICs). In addition to hardware, a computing device or hardware may also include code that creates an execution environment for computer programs. This code can take the form of processor firmware, a protocol stack, a database management system, an operating system, or a combination of these elements. Embodiments may particularly benefit from utilizing the parallel processing capabilities of GPUs, in a General-Purpose computing on Graphics Processing Units (GPGPU) context, where code specifically designed for GPU execution, often called kernels or shaders, is employed. Similarly, TPUs excel at running optimized tensor operations crucial for many machine learning algorithms. By leveraging these accelerators and their specialized programming models, the system can achieve significant speedups and efficiency gains for tasks involving artificial intelligence and machine learning, particularly in areas such as computer vision, natural language processing, and robotics.

A computer program, also referred to as software, an application, a module, a script, code, or simply a program, can be written in any programming language, including compiled or interpreted languages, and declarative or procedural languages. It can be deployed in various forms, such as a standalone program, a module, a component, a subroutine, or any other unit suitable for use within a computing environment. A program may or may not correspond to a single file in a file system and can be stored in various ways. This includes being embedded within a file containing other programs or data (e.g., scripts within a markup language document), residing in a dedicated file, or distributed across multiple coordinated files (e.g., files storing modules, subprograms, or code segments). A computer program can be executed on a single computer or across multiple computers, whether located at a single site or distributed across multiple sites and interconnected through a data communication network. The specific implementation of the computer programs may involve a combination of traditional programming languages and specialized languages or libraries designed for GPGPU programming or TPU utilization, depending on the chosen hardware platform and desired performance characteristics.

In this specification, the term "engine" broadly refers to a software-based system, subsystem, or process designed to perform one or more specific functions.

An engine is typically implemented as one or more software modules or components installed on one or more computers, which can be located at a single site or distributed across multiple locations. In some instances, one or more dedicated computers may be used for a particular engine, while in other cases, multiple engines may operate concurrently on the same one or more computers. Examples of engine functions within the context of AI and machine learning could include data preprocessing and cleaning, feature engineering and extraction, model training and optimization, inference and prediction generation, and post-processing of results. The specific design and implementation of engines will depend on the overall architecture and the distribution of computational tasks across various hardware components, including CPUs, GPUs, TPUs, and other specialized processors.

The processes and logic flows described in this specification can be executed by one or more programmable computers running one or more computer programs to perform functions by operating on input data and generating output. Additionally, graphics processing units (GPUs) and tensor processing units (TPUs) can be utilized to enable concurrent execution of aspects of these processes and logic flows, significantly accelerating performance. This approach offers significant advantages for computationally intensive tasks often found in AI and machine learning applications, such as matrix multiplications, convolutions, and other operations that exhibit a high degree of parallelism. By leveraging the parallel processing capabilities of GPUs and TPUs, significant speedups and efficiency gains compared to relying solely on CPUs can be achieved. Alternatively or in combination with programmable computers and specialized processors, these processes and logic flows can also be implemented using specialized processing hardware, such as field-programmable gate arrays (FPGAs) or application-specific integrated circuits (ASICs), for even greater performance or energy efficiency in specific use cases.

Computers capable of executing a computer program can be based on general-purpose microprocessors, special-purpose microprocessors, or a combination of both. They can also utilize any other type of central processing unit (CPU). Additionally, graphics processing units (GPUs), tensor processing units (TPUs), and other machine learning accelerators can be employed to enhance performance, particularly for tasks involving artificial intelligence and machine learning. These accelerators often work in conjunction with CPUs, handling specialized computations while the CPU manages overall system operations and other tasks. Typically, a CPU receives instructions and data from read-only memory (ROM), random access memory (RAM), or both. The essential elements of a computer include a CPU for executing instructions and one or more memory devices for storing instructions and data. The specific configuration of processing units and memory will depend on factors like the complexity of the AI model, the volume of data being processed, and the desired performance and latency requirements. Embodiments can be implemented on a wide range of computing platforms, from small embedded devices with limited resources to large-scale data center systems with high-performance computing capabilities. The system may include storage devices like hard drives, SSDs, or flash memory for persistent data storage.

Computer-readable media suitable for storing computer program instructions and data encompass all forms of non-volatile memory, media, and memory devices. Examples include semiconductor memory devices such as read-only memory (ROM), solid-state drives (SSDs), and flash memory devices; hard disk drives (HDDs); optical media; and optical discs such as CDs, DVDs, and Blu-ray discs. The specific type of computer-readable media used will depend on factors such as the size of the data, access speed requirements, cost considerations, and the desired level of portability or permanence.

To facilitate user interaction, embodiments of the subject matter described in this specification can be implemented on a computing device equipped with a display device, such as a liquid crystal display (LCD) or an organic light-emitting diode (OLED) display, for presenting information to the user. Input can be provided by the user through various means, including a keyboard), touchscreens, voice commands, gesture recognition, or other input modalities depending on the specific device and application. Additional input methods can include acoustic, speech, or tactile input, while feedback to the user can take the form of visual, auditory, or tactile feedback. Furthermore, computers can interact with users by exchanging documents with a user's device or application. This can involve sending web content or data in response to requests or sending and receiving text messages or other forms of messages through mobile devices or messaging platforms. The selection of input and output modalities will depend on the specific application and the desired form of user interaction.

Machine learning models can be implemented and deployed using machine learning frameworks, such as TensorFlow or JAX. These frameworks offer comprehensive tools and libraries that facilitate the development, training, and deployment of machine learning models.

Embodiments of the subject matter described in this specification can be implemented within a computing system comprising one or more components, depending on the specific application and requirements. These may include a back-end component, such as a back-end server or cloud-based infrastructure; an optional middleware component, such as a middleware server or application programming interface (API), to facilitate communication and data exchange; and a front-end component, such as a client device with a user interface, a web browser, or an app, through which a user can interact with the implemented subject matter. For instance, the described functionality could be implemented solely on a client device (e.g., for on-device machine learning) or deployed as a combination of front-end and back-end components for more complex applications. These components, when present, can be interconnected using any form or medium of digital data communication, such as a communication network like a local area network (LAN) or a wide area network (WAN) including the Internet. The specific system architecture and choice of components will depend on factors such as the scale of the application, the need for real-time processing, data security requirements, and the desired user experience.

The computing system can include clients and servers that may be geographically separated and interact through a communication network. The specific type of network, such as a local area network (LAN), a wide area network (WAN), or the Internet, will depend on the reach and scale of the application. The client-server relationship is established through computer programs running on the respective computers and designed to communicate with each other using appropriate protocols. These protocols may include HTTP, TCP/IP, or other specialized protocols depending on the nature of the data being exchanged and the security requirements of the system. In certain embodiments, a server transmits data or instructions to a user's device, such as a computer, smartphone, or tablet, acting as a client. The client device can then process the received information, display results to the user, and potentially send data or feedback back to the server for further processing or storage. This allows for dynamic interactions between the user and the system, enabling a wide range of applications and functionalities.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

Although several embodiments have been shown and described, it would be appreciated by those skilled in the art that changes may be made in these embodiments without departing from the principles of this disclosure, the scope of which is defined in the claims.

**Claims**

1. A computer implemented method comprising:

   receiving, via a user device, a user query;
   determining location information indicating a location;
   retrieving one or more location profiles based on the location information, wherein a location profile is associated with a respective geographic area, and wherein a location profile comprises a set of parameter modifications to parameters of a base machine-learning model;
   applying the set of parameter modifications of the one or more retrieved location profiles to the base machine-learning model to obtain a modified machine-learning model;
   processing the user query using the modified machine-learning model to generate a response to the user query; and
   outputting the response to the user query via the user device.

2. The method of claim 1, wherein:

   retrieving one or more location profiles based on the location information comprises retrieving a plurality of location profiles; and
   applying the set of parameter modifications of the one or more retrieved location profiles to the base machine-learning model comprises:

   determining a respective weight for each set of parameter modifications in the plurality of location profiles based on a respective distance of the geographic area associated with the respective location profile from the location indicated by the location information; and
   combining the sets of parameter modifications in the plurality of location profiles based on the respective weights for each set of parameter modifications.

3. The method of claim 2, wherein combining the set of parameter modifications in the plurality of location profiles based on the determined weightings comprises performing a weighted sum of the sets of parameter modifications in the plurality of location profiles.

4. The method of any of claims 2 or 3, wherein retrieving the plurality of location profiles comprises retrieving location profiles associated with geographic areas within a threshold distance of the location indicated by the location information.

5. The method of any of claims 2 or 3, wherein retrieving the plurality of location profiles comprises retrieving a first location profile corresponding to a first geographic area in which the location indicated by the location information is located and one or more further location profiles corresponding to respective geographic areas neighbouring the first geographic area.

6. The method of any preceding claim, wherein the method further comprises:

   subsequent to receiving the user query, determining that the user query is related to a user location; and
   determining a location of the user device,
   wherein the location indicated by the location information comprises the user device location
   wherein retrieving the one or more location profiles and applying the set of parameter modifications of the one or more retrieved location profiles to the base machine-learning model are performed in response to determining that the user query is related to the user location.

7. The method of any preceding claim, wherein:

   the base machine-learning model is stored on the user device; and
   retrieving the one or more location profiles based on the location of the user device comprises:

determining that the location indicated by the location information does not correspond to a respective geographic area associated with any of one or more locally-stored location profiles on the user device; in response to determining that the location indicated by the location information does not correspond to a respective geographic area associated with any of one or more locally-stored location profiles:

requesting, from a server, one or more location profiles associated with respective geographic areas that correspond to the location of the user device; and receiving, from the server, one or more location profiles associated with respective geographic areas that correspond to the location of the user device.

8. A computer implemented method for training location profiles for a base machine-learning model, the method comprising:
for a plurality of training examples:

assigning the training example to a respective geographic area in a plurality of geographic areas based on location information associated with the training example; retrieving one or more location profiles based on the location information associated with the training example, wherein each location profile is associated with a respective geographic area, and wherein a location profile comprises a set of parameter modifications to parameters of a base machine-learning model; applying the set of parameter modifications of the one or more retrieved location profiles to the base machine-learning model to obtain a modified machine-learning model; processing the training examples using the modified machine-learning model to generate a set of candidate output data; evaluating an objective function based on the set of candidate output data; and updating the set of parameter modifications of the location profile based on the objective function while keeping parameters of base model fixed.

9. The method of claim 8, wherein retrieving one or more location profiles based on the location information associated with the training example comprises retrieving a plurality of location profiles within a threshold distance of the location information associated with the training example; and
wherein applying the set of parameter modifications of the one or more retrieved location profiles to the base machine-learning model to obtain the modified machine-learning model comprises:

determining a weighted sum of parameter modifications from the retrieved plurality of location profiles, wherein a respective weight for each set of parameter modifications is dependent on a distance of the respective geographic area associated with the respective location profile from the location information associated with the training example; and applying the weighted sum of parameter modifications to the base machine-learning model.

10. The method of any of claims 8 or 9, wherein the method further comprises:
determining the plurality of geographic areas based on a distribution of the location information of the training examples.

11. The method of any preceding claim, wherein one or more sets of parameter modifications to parameters of the base machine-learning model comprise parameters of one or more low rank adaption matrices.

12. The method of any preceding claim, wherein the geographic area associated with a location profile is an S2 cell.

13. The method of any preceding claim, wherein the base machine-learning model and modified machine-learning model are language models.

14. A computer program product comprising computer readable instructions that, when executed by a computer, cause the computer to perform operations comprising a method according to any preceding claim.

15. A system comprising:

one or more processors; and a memory, the memory storing computer readable instructions that, when executed by the one or more processors, causes the system to perform operations comprising a method according to any of claims 1 to 13.

FIG. 1

EP 4 726 574 A1

FIG. 2A

EP 4 726 574 A1

FIG. 2B

FIG. 3

EP 4 726 574 A1

400

```
┌────────────────────────────────────────────────────┐
│                                                    │
│      Receive a user query via a user device        │
│                                              402   │
└────────────────────────────────────────────────────┘
                         │
                         ▼
┌────────────────────────────────────────────────────┐
│                                                    │
│        Determine a location of the user device     │
│                                              404   │
└────────────────────────────────────────────────────┘
                         │
                         ▼
┌────────────────────────────────────────────────────┐
│   Retrieve one or more location profiles based on   │
│            the location of the user device          │
│                                              406   │
└────────────────────────────────────────────────────┘
                         │
                         ▼
┌────────────────────────────────────────────────────┐
│   Apply the set of parameter modifications of the   │
│   one or more retrieved location profiles to a base │
│   machine-learning model to obtain a modified       │
│   machine-learning model                            │
│                                              408   │
└────────────────────────────────────────────────────┘
                         │
                         ▼
┌────────────────────────────────────────────────────┐
│   Process the user query using the modified         │
│   machine-learning model to generate a response to  │
│   the user query                             410   │
└────────────────────────────────────────────────────┘
                         │
                         ▼
┌────────────────────────────────────────────────────┐
│   Cause the response to the user query to be output │
│            via the user device                      │
│                                              412   │
└────────────────────────────────────────────────────┘
```

FIG. 4

500

Assign a training example to a respective geographic area in a plurality of geographic areas based on location information associated with the training example

502

Retrieve one or more location profiles based on the location information associated with the training example

504

Apply the set of parameter modifications of the one or more retrieved location profiles to the base machine-learning model to obtain a modified machine-learning model

506

Process the training example using the modified machine-learning model to generate a set of candidate output data

508

Evaluate an objective function based on the set of candidate output data

510

Update the set of parameter modifications of the one or more location profiles based on the objective function

512

FIG. 5

FIG. 6

| | Europäisches Patentamt European Patent Office Office européen des brevets | **EUROPEAN SEARCH REPORT** | **Application Number** EP 24 20 6513 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/082187 A1 (KATZ EDWARD G [US] ET AL) 22 March 2018 (2018-03-22) * paragraphs [0003] - [0004], [0028], [0031], [0034], [0049] - [0066], [0112], [0120] - [0122] * ----- | 1-15 | INV. G06F16/3329 G06F16/387 |
| A | US 2024/220735 A1 (GRAY MATTHEW K [US] ET AL) 4 July 2024 (2024-07-04) * paragraphs [0011], [0031], [0036] - [0038], [0042] - [0044], [0050] - [0058], [0115] - [0116], [0138] - [0141], [0151], [0175] * ----- | 1-15 | |
| A | ZEYU HAN ET AL: "Parameter-Efficient Fine-Tuning for Large Models: A Comprehensive Survey", ARXIV.ORG, CORNELL UNIVERSITY LIBRARY, 201 OLIN LIBRARY CORNELL UNIVERSITY ITHACA, NY 14853, 17 April 2024 (2024-04-17), XP091730235, * the whole document * ----- | 1-15 | |

**TECHNICAL FIELDS SEARCHED (IPC)**

G06F

The present search report has been drawn up for all claims

| Place of search | Date of completion of the search | Examiner |
|---|---|---|
| The Hague | 20 February 2025 | Bercan, Radu |

CATEGORY OF CITED DOCUMENTS

X : particularly relevant if taken alone
Y : particularly relevant if combined with another
　　document of the same category
A : technological background
O : non-written disclosure
P : intermediate document

T : theory or principle underlying the invention
E : earlier patent document, but published on, or
　　after the filing date
D : document cited in the application
L : document cited for other reasons
 
& : member of the same patent family, corresponding
　　document

EPO FORM 1503 03.82 (P04C01)

## ANNEX TO THE EUROPEAN SEARCH REPORT
## ON EUROPEAN PATENT APPLICATION NO.

EP 24 20 6513

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2025

| Patent document cited in search report | Publication date | Patent family member(s) | Publication date |
|---|---|---|---|
| US 2018082187 A1 | 22-03-2018 | NONE | |
| US 2024220735 A1 | 04-07-2024 | US 11769017 B1 | 26-09-2023 |
| | | US 11886828 B1 | 30-01-2024 |
| | | US 11900068 B1 | 13-02-2024 |
| | | US 2024220735 A1 | 04-07-2024 |

EPO FORM P0459

For more details about this annex : see Official Journal of the European Patent Office, No. 12/82